# EUROPÄISCHE PATENTSCHRIFT

(11) **EP 1 961 607 B1**
(45) Veröffentlichungstag und Bekanntmachung des Hinweises auf die Patenterteilung: **13.01.2010**
(21) Anmeldenummer: 08002458.1
(22) Anmeldetag: 11.02.2008
(51) Int. Cl.: B60N 2/06, B60N 2/24, B62D 33/063, E01C 19/26

(54) **Sitzvorrichtung zur Anordnung in einer Fahrerkabine**
Seat device for installation in a driver's cab
Siège destiné à être installé dans une cabine de conduite

(30) Priorität: 26.02.2007 DE 102007009224; 22.04.2007 DE 102007018744
(43) Veröffentlichungstag der Anmeldung: 27.08.2008
(73) Patentinhaber: BOMAG GmbH, 56154 Boppard (DE)
(72) Erfinder: Klein, Thomas, 56653 Wehr (DE); Haubrich, Thomas, 56290 Gödenroth (DE)
(74) Vertreter: Lang, Friedrich

(56) Entgegenhaltungen:
- EP-A- 0 733 742
- EP-A- 0 935 025
- DE-A1- 19 813 474
- US-A1- 2006 225 935

## Beschreibung

Die vorliegende Erfindung betrifft eine Sitzvorrichtung zur Anordnung in einer zumindest eine Trittfläche und ein Bedienpult aufweisenden Fahrerkabine eines Baufahrzeugs, insbesondere einer Bodenverdichtungsmaschine, wobei die Sitzvorrichtung einen Fahrersitz und eine Verstelleinrichtung umfasst, und wobei die Verstelleinrichtung zwei Führungsschienen und einen Sitzträger aufweist, wobei der Sitzträger, quer zur Fahrtrichtung des Baufahrzeugs verstellbar, an den Führungsschienen gelagert ist.

Die aus dem Stand der Technik bekannten Sitzvorrichtungen der gattungsgemäßen Art weisen dazu im Bodenbereich bzw. auf der Trittfläche der Fahrerkabine angeordnete Führungsschienen auf. Der Fahrersitz kann über einen Sitzträger mit den Führungsschienen verbunden werden und ist in Längsrichtung der Führungsschienen verlaufend auf diesen verschiebbar angeordnet. Der Fahrersitz ist unmittelbar mit den Führungsschienen verbunden bzw. bildet mit dem Sitzträger und den Führungsschienen die Verstelleinrichtung. Die Führungsschienen sind so im Bodenbereich bzw. auf der Trittfläche angeordnet, dass sie sich in Querrichtung zur Fahrbahn parallel zueinander verlaufend im Wesentlichen vollständig unterhalb des Sitzes bzw. des Sitzträgers befinden. Dies ist aus vielerlei Gründen unvorteilhaft.

Der Fahrer, der die Fahrerkabine zum Betrieb der Baumaschine besteigt, ist gezwungen, zumindest bereichsweise über die Führungsschienen zu steigen bzw. auf diese zu treten, um den Fahrersitz der Baumaschine zu erreichen und damit seine Arbeitsposition einzunehmen. Dies ist insofern gefährlich und unvorteilhaft, als der Fahrer über die Führungsschienen stolpern bzw. durch diese umknicken kann. Unter Umständen muss der Fahrer die Fahrerkabine mehrmals stündlich verlassen und kommt somit wiederholt in die Gefahr eines Arbeitsunfalls. Da eine vollständige Verstellbarkeit des Sitzträgers in Längsrichtung der Führungsschienen gewährleistet werden muss, ist es nicht möglich, Bereiche der Führungsschienen abzudecken. Dadurch wiederum entsteht ein erhöhter Wartungsbedarf und eine erhöhte Beschädigungsgefahr für die Führungsschienen. Ein weiterer Nachteil der bekannten Anordnung der Führungsschienen besteht darin, dass, nachdem der Fahrer seine Arbeitsposition eingenommen hat, oftmalige Positionsveränderungen von Seiten des Fahrers vorgenommen werden müssen. Auch hierbei stören die auf der Trittfläche unterhalb des Sitzes angeordneten Führungsschienen.

Eine Sitzvorrichtung der betreffenden Art ist aus der dem Oberbegriff des Anspruchs 1 entsprechenden DE 198 13 474 A1 bekannt. Die darin beschriebene Sitzvorrichtung ist zur Anordnung in einer eine Trittfläche und einen Bedienpult aufweisenden Fahrerkabine (bzw. Fahrstand) einer Baumaschine vorgesehen. Die Sitzvorrichtung umfasst einen Fahrersitz und eine Verstelleinrichtung. Zur Verstelleinrichtung gehören zwei Führungsschienen die auf der Trittfläche der Fahrerkabine angeordnet sind und ein Sitzträger (Fahrstandslafette) der quer zu einer Fahrtrichtung der Baumaschine verstellbar an den Führungsschienen gelagert ist. Eine ähnliche Sitzvorrichtung ist auch aus der US 2006/0225935 A1 bekannt. Die in diesen Patentschriften beschriebenen Sitzvorrichtungen weisen die eingangs genannten Nachteile auf.

Die Aufgabe der Erfindung ist es, eine Sitzvorrichtung der oben genannten Art zu schaffen, welche die Sicherheit für den Fahrer verbessert und darüber hinaus eine verbesserte Haltbarkeit aufweist.

Die Lösung dieser Aufgabe gelingt mit einer Sitzvorrichtung nach Anspruch 1. Bevorzugte Weiterbildungen dieser erfindungsgemäßen Sitzvorrichtung sind in den Unteransprüchen beschrieben.

Die erfindungsgemäße Sitzvorrichtung unterscheidet sich also von den eingangs genannten Sitzvorrichtungen dadurch, dass die Führungsschienen so neben der vom Fahrer genutzten Trittfläche angeordnet sind, dass der Sitzträger relativ zur Trittfläche frei schwebend über dieser verschoben werden kann. Daraus resultiert, dass die vom Fahrer benutzte Trittfläche bzw. der vom Fahrer zu benutzende Fußraum frei von Führungsschienen ist. Der letztendliche Abstand zwischen der Unterseite des Sitzträgers und der Trittfläche spielt erfindungsgemäß keine Rolle, solange gewährleistet wird, dass eine frei schwebende Anordnung des Sitzträgers relativ zur Trittfläche erfolgt. Dies hat den Vorteil, dass keine störenden Führungsschienen vorhanden sind, die den Fahrer beim Ein- oder Aussteigen bzw. während der Arbeit behindern und zu einer Verletzungsgefahr des Fahrers führen können.

Der Sitzträger kann bevorzugt in der Art einer Traverse, insbesondere in der Art eines Aluminiumgussteils, ausgebildet sein. Es ist natürlich auch denkbar, den Sitzträger als Eisenguss- oder Schweißteil auszubilden. Die Ausführung als Aluminiumgussteil hat jedoch den Vorteil, dass der Sitzträger ein relativ geringes Eigengewicht und somit eine bessere Verstellbarkeit gewährleistet. Es ist ferner denkbar, den Sitzträger gerade oder bevorzugt bügelförmig auszubilden, wobei bei einer bügelförmigen Ausführungsform die Schenkelenden des Sitzträgers nach oben also von der Trittfläche bzw. dem Fahrerstandboden weg weisen.

Um eine Verstellung bzw. Bewegung des Sitzträgers zu ermöglichen, können am Sitzträger Mittel vorgesehen sein, die funktionskomplementär zur Führungsschiene ausgebildet sind und die Verstellung des Sitzträgers in Längsrichtung der Führungsschiene ermöglichen.

Bevorzugt sind diese Mittel in der Art eines Linearlagers oder einer Rollenführung ausgebildet. Es ist auch denkbar, ein Ende des Sitzträgers mit einem Linearlager und ein Ende mit einer Rollenführung zu versehen. Die Rollenführung kann dabei mit Arretierungsmitteln versehen sein, die eine Arretierung der seitlichen Sitzverschiebung ermöglichen. Der Fahrersitz bzw. der Sitzträger kann dann bei Bedarf in einer frei wählbaren Stellung auf den Führungsschienen arretiert werden. Mit anderen Worten kann ein Ende des Sitzträgers fest mit der Führungsschiene, beispielsweise über ein Linearlager, verbunden sein, während das andere Ende über eine Rollenführung lediglich auf einer funktionskomplementären Führungsschiene aufgelegt wird. Dadurch kann der Sitzträger bei Bedarf angehoben und um die Längsachse des Linearlagers bzw. der zugehörigen Führungsschiene verschwenkt werden. In diesem Falle wäre die komplette Trittfläche der Fahrerkabine frei begehbar.

Eine Ausführungsform sieht daher vor, dass, in Fahrtrichtung betrachtet, eine Führungsschiene zumindest geringfügig vor und eine Führungsschiene zumindest geringfügig hinter dem Fahrersitzangeordnet sein kann, wobei sich zwischen den Führungsschienen der Sitzträger erstreckt. Der Sitzträger entspricht in seiner Längsausrichtung also im Wesentlichen dem Abstand zwischen zwei Führungsschienen. Wie groß dieser Abstand letztendlich ist, liegt an der Größe der Fahrerkabine bzw. an der Größe der zur Verfügung stehenden Trittfläche.

Eine bevorzugte Ausführungsform sieht vor, dass zumindest die vordere Führungsschiene relativ zur Trittfläche erhöht, bevorzugt, jedoch keinesfalls zwingend, in Schienbeinhöhe des Fahrers verlaufend, angeordnet sein kann. Dies ist insofern vorteilhaft, als dem Fahrer der gesamte Fußraum, also auch der Fußraum unterhalb der Führungsschiene, zur Verfügung steht.

Jeder Führungsschiene kann ferner ein Stütz- oder Trägerelement zugeordnet sein, wobei die Führungsschiene zumindest bereichsweise am Stütz- oder Trägerelement befestigbar ist. Das Stütz- oder Trägerelement kann als separates, speziell auf die jeweilige Führungsschiene abgestimmtes Bauteil ausgebildet sein. Es ist jedoch auch denkbar, dass Bereiche bzw. Teile der Fahrerkabine, bevorzugt die Front-, Rück- oder Seitenwände der Fahrerkabine, das Stütz- oder Trägerelement bilden. Die Führungsschiene ist dabei bevorzugt so zu befestigen bzw. auszulegen, dass eine vollständige Nutzbarkeit im Hinblick auf die Verfahrstrecke des Sitzträgers gewährleistet werden kann.

Kommen Linearführungen oder dergleichen zum Einsatz, kann die Führungsschiene bevorzugt als Welle oder Walze ausgebildet werden. Eine Kombination aus Welle und Linearlager bietet den Vorteil einer preisgünstigen Ausführungsform bei gleichzeitig nahezu wartungsfreiem Betrieb.

Es ist jedoch auch denkbar, die Führungsschiene in der Art einer Gleit- oder Linearführung auszubilden, wobei unter Linearführung hierbei beispielsweise eine mit einem rechteckigen Querschnitt versehene Führungsschiene verstanden werden kann. Ein dazugehöriges funktionskomplementäres Mittel, insbesondere eine Lagereinheit, gewährleistet die Verstellbarkeit des Sitzträgers auf der Führungsschiene. In der einfachsten Ausführungsform kann die Führungsschiene beispielsweise auch mit einem winkel- oder T-Profil-förmigen Querschnitt ausgebildet sein. Entsprechende Mittel am Sitzträger, beispielsweise Rollen, Räder, Zahnräder oder Kugellager, gewährleisten in diesem Falle die Verstellung des Sitzträgers.

Eine besonders bevorzugte Ausführungsform sieht vor, dass zwischen Fahrersitz und Sitzträger eine arretierbare Sitzdreheinheit vorgesehen ist, wobei der Fahrersitz mit Hilfe der Sitzdreheinheit um eine vertikale Drehachse der Sitzdreheinheit um 360 Grad auf dem Sitzträger gedreht werden kann. Der Fahrer kann sich somit, ohne aufzustehen, in verschiedene Richtungen innerhalb der Fahrerkabine orientieren.

Neben einer Sitzdreheinheit können ferner Mittel, insbesondere Mittel zur Sitzverstellung, vorgesehen sein, mit denen der Fahrersitz beispielsweise am Sitzträger entlang verschoben werden kann. Dabei kann eine Vor-Rück-Bewegung des gesamten Sitzes einen Beinlängenausgleich und die Verstellung des Neigungswinkels der Rückenlehne einen Armlängenausgleich im Hinblick auf das vom Fahrer zu erreichende Bedienpult bzw. Lenkpult bewirken.

Ein Ausführungsbeispiel der Erfindung wird im Folgenden anhand der Zeichnungen näher erläutert. Es zeigen schematisch:
- Figur 1: eine Darstellung eines Fahrerstandbodens einer Fahrerkabine mit in der Fahrerkabine angeordneter Sitzvorrichtung;
- Figur 2: eine erste Detailansicht "X" aus Fig. 1 in einer vergrößerten Darstellung;
- Figur 3 und 4: eine zweite Detailansicht "Z" aus Fig. 1 in einer vergrößerten Querschnittsdarstellung bzw. einer perspektivischen Ansicht; und
- Figur 5: eine perspektivische Explosionsdarstellung von Einzelheiten der Sitzanordnung

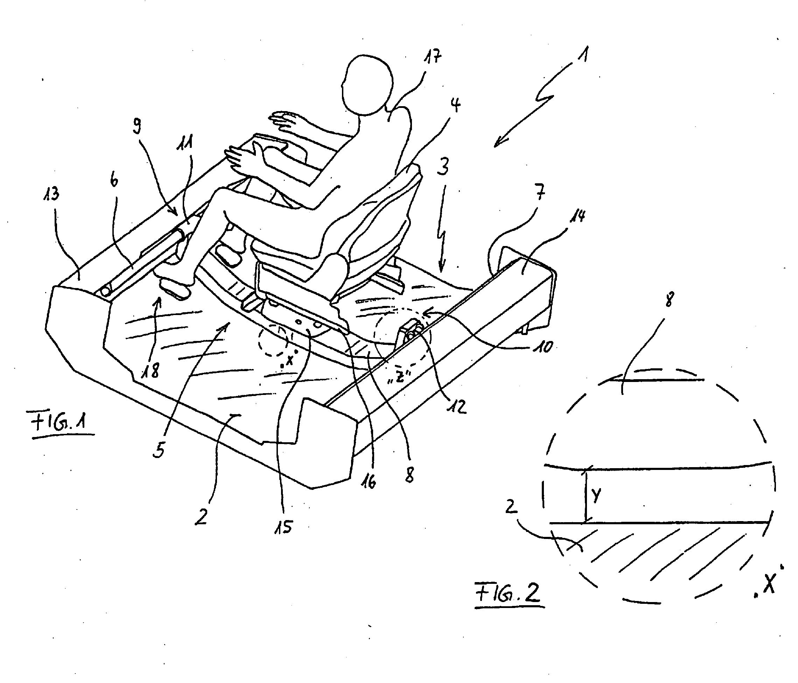

Fig. 1 zeigt in schematischer Darstellung eine Sitzvorrichtung 1, welche im Bereich der Trittfläche 2 eines Fahrerstandbodens 3 einer nicht näher gezeigten Fahrerkabine einer Baumaschine, insbesondere einer Bodenverdichtungsmaschine, angeordnet ist. Die Trittfläche 2 erstreckt sich nahezu über den gesamten Bereich des Fahrerstandbodens.

Die Sitzvorrichtung 1 umfasst einen Fahrersitz 4 und eine Verstelleinrichtung 5. Die Verstelleinrichtung 5 wiederum weist zwei parallele Führungsschienen 6 und 7 und einen Sitzträger 8 auf. Die beiden Führungsschienen 6, 7 verlaufen quer zur Fahrtrichtung der betreffenden Baumaschine und erstrecken sich im wesentlichen über die Breite der Trittfläche 2. Sie sind im Bereich der vorderen bzw. hinteren Begrenzung der Fahrerkabine in der Weise angeordnet, dass sie die gesamte Trittfläche 2 des Fahrerstandbodens 3 frei lassen. Der Sitzträger 8 ist an seinen beiden Enden an den beiden Führungsschienen 6, 7 verschiebbar gelagert. Er ist somit quer zur Fahrtrichtung des Baufahrzeugs verstellbar. Somit kann der Fahrersitz 4 quer zur Fahrtrichtung verschoben und in seiner Position bezüglich der Längsachse des Baufahrzeugs verändert werden. Die erste Führungsschiene 6 ist am vorderen Rand der Trittfläche 2 in der Weise angeordnet, dass die Trittfläche mit genügend Freiraum nach oben bis unter die erste Führungsschiene reicht, so dass der Fahrer der Baumaschine seine Füße noch unter die erste Führungsschiene 6 schieben kann. Die zweite Führungsschiene 7 verläuft am hinteren Rand der Trittfläche 2. Der Sitzträger 8 überbrückt auf diese Weise die gesamte Trittfläche 2.

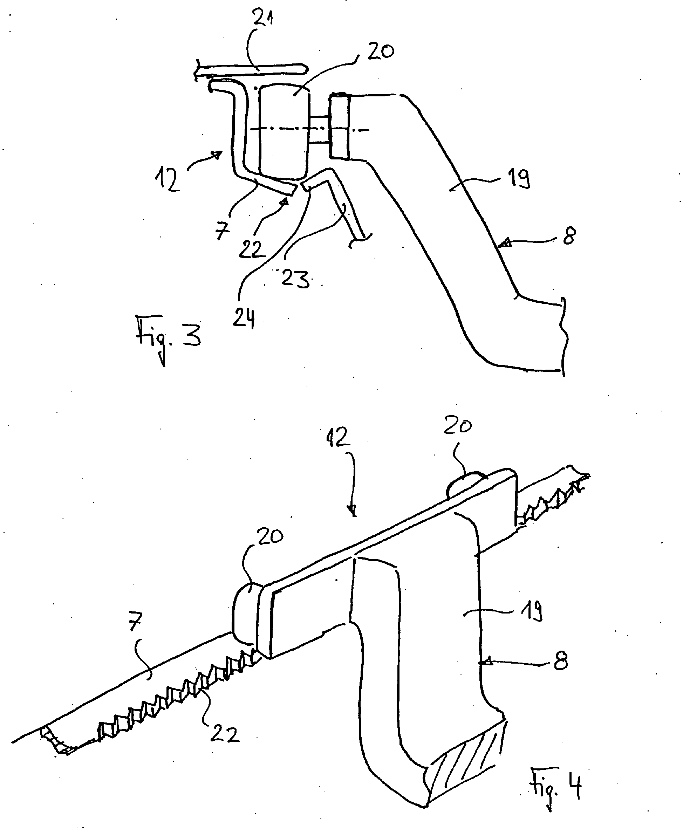

Der Sitzträger 8 ist als bügelförmige Traverse ausgebildet, deren Breite so gewählt ist, dass sie zwischen den Beinen des Fahrers verläuft, wenn der Fahrersitz 4 in Fahrtrichtung ausgerichtet ist. Somit kann der Fahrer seine Füße neben der Traverse in jeder Position der Traverse unbehindert auf die Trittfläche 2 setzen. Der Sitzträger 8 weist an seinen beiden Enden 9 und 10 ein erstes und zweites Mittel 11 und 12 auf, mit denen er auf der ersten bzw. zweiten Führungsschiene 6, 7 in seiner Position verstellt und verschoben werden kann. Bei der ersten Führungsschiene handelt es sich um eine Welle mit rundem Querschnitt. Das erste Mittel 11 ist als Linearlager ausgebildet, welches die erste Führungsschiene 6 in der Weise umgreift, dass der Sitzträger querverschiebbar und bei Bedarf hochschwenkbar ist. Mit dem ersten Mittel 11 ist der Sitzträger somit auch an der ersten Führungsschiene gehalten und in seiner Winkelausrichtung zur ersten Führungsschiene 6 fixiert. Bei dem zweiten Mittel 12 handelt es sich um eine Rollenführung bevorzugt mit zwei in Verschieberichtung beabstandeten Laufrollen 20 (Fig. 3), welche mit der zweiten Führungsschiene 7 zusammenwirkt dergestalt, dass die Laufrollen 20 von oben auf der zweiten Führungsschiene 7 auffliegen und darauf abrollen können. Gegen unbeabsichtigtes Abheben der Laufrollen ist oberhalb der zweiten Führungsschiene 7 und parallel dazu eine bei Bedarf entfernbare Sicherungsschiene 21 (Fig. 3) angeordnet.

Damit der Sitzträger 8 einerseits möglichst abgesenkt und mit geringem Abstand Y (Fig. 2) über der Trittfläche 2 verlaufen kann, und andererseits die erste und zweite Führungsschiene 6, 7 mit ausreichendem Abstand von der Trittfläche 2 angeordnete werden können, sind die Enden des Sitzträgers 8 jeweils mit einer Kröpfung 19 (Fig. 3 und 4) nach oben versehen, welche das erste bzw. zweite Mittel 11, 12 zur Lagerung tragen.

Die Führungsschienen 6 und 7 sind so angeordnet, dass sich bedingt durch die Ausgestaltung des Sitzträgers 8, welcher sich zwischen den Führungsschienen 6 und 7 erstreckt, eine relativ zur Trittfläche 2 frei schwebende Anordnung des Sitzträgers 8 ergibt. Gut zu erkennen ist diese frei schwebende Anordnung in der vergrößerten Darstellung gemäß Detailansicht "X" in Fig. 2. Die Führungsschienen 6 und 7 sind mit zwei Trägerelementen 13 und 14 verbunden, wobei die Trägerelemente 13 und 14 zum konstruktiven Aufbau des Fahrerstandbodens bzw. der Fahrerkabine gehören.

Zwischen Fahrersitz 4 und Sitzträger 8 ist eine arretierbare Sitzdreheinheit 15 angeordnet, wobei der Fahrersitz 4 bei Bedarf mit Hilfe der Sitzdreheinheit 15 um eine vertikale Drehachse der Sitzdreheinheit 15 um 360 Grad gedreht werden kann. Die Sitzdreheinheit 15 ist im Wesentlichen mittig auf dem Sitzträger 8 angeordnet und über Befestigungsmittel, insbesondere Schrauben, lösbar mit diesem verbunden. Ferner sind Mittel 16, in der Art einer Stellschiene, vorgesehen, mit denen der Fahrersitz 4 in Fahrtrichtung entlang des Sitzträgers 8 verschoben werden kann. Der Fahrer 17 kann in dieser Position ein nicht dargestelltes Bedien- oder Lenkpult bedienen, welches sich in Fahrtrichtung betrachtet vor dem Fahrer 17 oberhalb der ersten Führungsschiene 6 befindet. Die Füße des Fahrers 17 können gegebenenfalls unterhalb der Führungsschiene 6 angeordnete Fußpedale 18 bedienen, wobei die Führungsschiene 6 oberhalb der Füße, im Wesentlichen auf Schienbeinhöhe des Fahrers 17, verläuft. Bei Bedarf kann der gesamte Sitzträger 8 um die Längsachse der Führungsschiene 6 angehoben bzw. verschwenkt werden. Dazu muss im einfachsten Fall einfach das Ende 10 des Sitzträgers 8 von der Führungsschiene 7 angehoben werden. In Betriebsstellung kann der Sitzträger 8 mittels der arretierbaren Rollenführung, der Mittel 12, bezogen auf die Längsrichtung der Führungsschienen 6 und 7 auf diesen fixiert bzw. arretiert werden.

Fig. 2 zeigt die vergrößerte Detailansicht "X" gemäß Fig. 1. Zu erkennen ist die Trittfläche 2 sowie der Sitzträger 8. Der Abstand "Y" verdeutlicht, dass sich der Sitzträger 8 in einer frei schwebenden Anordnung über der Trittfläche 2 befindet. Durch die entsprechende Anordnung der ersten und zweiten Führungsschienen 6, 7 im Fahrerstand kann auf unter dem Fahrersitz 4 angeordnete Führungsschienen, wie aus dem Stand der Technik bekannt, verzichtet werden. Dem Fahrer bietet sich somit die komfortable Situation, beim Ein- oder Aussteigen aus der Fahrerkabine bzw. bei Positionsveränderungen des Sitzes während der Arbeit nicht auf störende, auf der Trittfläche 2 des Fahrerstandes verlaufende Führungsschienen achten zu müssen. Somit kann, bei gleichzeitiger Erhöhung des Komforts für den Fahrer, die Gefahr eines Arbeitsunfalls für den Fahrer signifikant gesenkt werden.

Fig. 3 und Fig. 4 veranschaulichen Einzelheiten der Lagerung des Sitzträgers 8 an der zweiten Führungsschiene 7. Demnach liegen die Laufrollen 20 auf der Führungsschiene 7, die als freier Schenkel eines Profilteils ausgebildet ist. Der freie Rand der zweiten Führungsschiene 7 bzw. des Schenkels, welcher dem Sitzträger 8 zugewandt ist, ist mit einer ersten Verzahnung 22 versehen zum Arretieren der Position des Sitzträgers 8 entlang der zweiten Führungsschiene 7. In diese erste Verzahnung greift lösbar eine zweite Verzahnung 24 am Ende eines Arretierungshebels 23 ein, der am Sitzträger 8 angeordnet ist. Solange die erste und die zweite Verzahnung ineinander eingreifen, kann der Sitzträger nicht verschoben werden. Wird der Arretierungshebel 23 aus dem Eingriff mit der ersten Verzahnung gelöst, kann eine Verschiebung erfolgen.

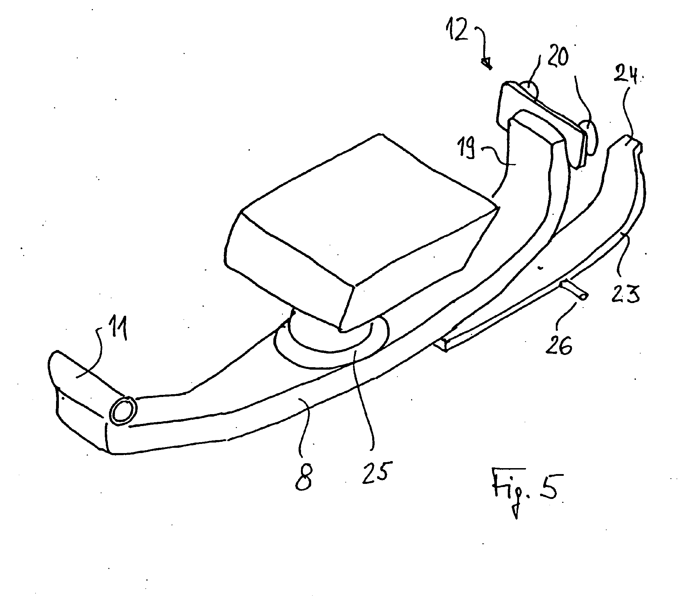

Wie Fig. 5 weiter zeigt, ist der Arretierungshebel 23 als Wippe ausgebildet, die um eine horizontale Achse 26 parallel zur zweiten Führungsschiene 7 in der Weise ausgelenkt werden kann, dass die zweite Verzahnung 24 wahlweise mit der ersten Verzahnung 22 in Eingriff gelangt oder sie freigibt. Die Betätigung des Arretierungshebels erfolgt über ein Hebelgestänge (nicht dargestellt), welches vom Fahrer betätigt wird. In Fig. 5 ist mit 25 ferner der Fuß der Sitzdreheinheit 15 bezeichnet.

## Patentansprüche

1. Sitzvorrichtung (1) zur Anordnung in einer zumindest eine Trittfläche (2) und ein Bedienpult aufweisenden Fahrerkabine eines Baufahrzeugs, insbesondere einer Bodenverdichtungsmaschine, wobei die Sitzvorrichtung (1) einen Fahrersitz (4) und eine Verstelleinrichtung (5) sowie die Trittfläche (2) umfasst, und wobei die Verstelleinrichtung (5) zwei Führungsschienen (6, 7) und einen relativ zur Trittfläche (2) frei schwebenden und über dieser verschiebbaren Sitzträger (8) aufweist, wobei der Sitzträger (8), quer zur Fahrtrichtung des Baufahrzeugs verstellbar, an den Führungsschienen (6, 7) gelagert ist,
**dadurch gekennzeichnet,**
**dass** die Führungsschienen (6, 7) so neben der vom Fahrer (17) genutzten Trittfläche (2) angeordnet sind, dass die Trittfläche (2) mit genügend Freiraum nach oben bis unter die erste Führungsschiene (6) reicht, so dass der Fahrer (17) des Baufahrzeugs seine Füße noch unter die erste Führungsschiene (6) schieben kann, und dass der Sitzträger (8) als eine Traverse ausgebildet ist, deren Breite so gewählt ist, dass der Sitzträger (8) zwischen den Beinen des Fahrers (17) verläuft, wodurch der Fahrer (17) seine Füße ungehindert auf die Trittfläche (2) setzen kann.

2. Sitzvorrichtung für Baufahrzeuge nach Anspruch 1,
**dadurch gekennzeichnet,**
**dass** der Sitzträger (8) in der Art einer Traverse, beispielsweise in der Art eines Aluminiumgussteils oder Eisenträgers, ausgebildet ist.

3. Sitzvorrichtung für Baufahrzeuge nach einem der Ansprüche 1 oder 2,
**dadurch gekennzeichnet,**
**dass** am Sitzträger (8) Mittel (11, 12) vorgesehen sind, die funktionskomplementär zur Führungsschiene (6, 7) ausgebildet sind und eine Verstellung des Sitzträgers (8) in Längsrichtung der Führungsschiene (6, 7) ermöglichen.

4. Sitzvorrichtung für Baufahrzeuge nach Anspruch 3,
**dadurch gekennzeichnet,**
**dass** die Mittel (11, 12) in der Art eines Linearlagers oder einer Rollenführung ausgebildet sind.

5. Sitzvorrichtung für Baufahrzeuge nach einem der Ansprüche 1 bis 4,
**dadurch gekennzeichnet,**
**dass**, in Fahrtrichtung betrachtet, eine Führungsschiene (6) zumindest geringfügig vor und eine Führungsschiene (7) zumindest geringfügig hinter dem Fahrersitz(4) angeordnet ist, wobei sich zwischen den Führungsschienen (6, 7) der Sitzträger (8) erstreckt.

6. Sitzvorrichtung für Baufahrzeuge nach einem der Ansprüche 1 bis 5,
**dadurch gekennzeichnet,**
**dass** zumindest die vordere Führungsschiene (6) relativ zur Trittfläche (2) erhöht, bevorzugt jedoch in Schienbeinhöhe des Fahrers (17) verlaufend, angeordnet ist.

7. Sitzvorrichtung für Baufahrzeuge nach einem der Ansprüche 1 bis 6,
**dadurch gekennzeichnet,**
**dass** jeder Führungsschiene (6, 7) ein Stütz- oder Trägerelement (13, 14) zugeordnet ist, wobei die Führungsschiene (6, 7) zumindest bereichsweise am Stütz- oder Trägerelement (13, 14) befestigbar ist.

8. Sitzvorrichtung für Baufahrzeuge nach einem der Ansprüche 1 bis 7,
**dadurch gekennzeichnet,**
**dass** die Führungsschiene (6, 7) als Welle ausgebildet ist.

9. Sitzvorrichtung für Baufahrzeuge nach einem der Ansprüche 1 bis 8,
**dadurch gekennzeichnet,**
**dass** die Führungsschiene (6, 7) in der Art einer Gleit- oder Linearführung ausgebildet ist.

10. Sitzvorrichtung für Baufahrzeuge nach einem der Ansprüche 1 bis 9,
**dadurch gekennzeichnet,**
**dass** eine arretierbare Sitzdreheinheit (15) vorgesehen ist, wobei die Sitzdreheinheit (15) zwischen Fahrersitz(4) und Sitzträger (8) angeordnet ist, und wobei der Fahrersitz(4) mit Hilfe der Sitzdreheinheit (15) um eine vertikale Drehachse der Sitzdreheinheit (15) um 360 Grad gedreht werden kann.

11. Sitzvorrichtung für Baufahrzeuge nach einem der Ansprüche 1 bis 10,
**dadurch gekennzeichnet,**
**dass** Mittel (16) vorgesehen sind, mit denen der Fahrersitz(4) und/oder die Sitzdreheinheit (15) am Sitzträger (8) entlang verschoben werden kann.

## Claims

1. A seating apparatus (1) for arrangement in a driver's cabin of a construction vehicle, especially a soil compacting machine, comprising at least a treading surface (2) and an operating desk, wherein the seating apparatus (1) comprises a driver's seat (4), an adjusting device (5) as well as the treading surface (4), and wherein the adjusting device (5) comprises two guide rails (6, 7) and a seat carrier (8) floating freely with respect to the treading surface (2) and displaceable above the same, wherein the seat carrier (8), which is transversally adjustable with respect to the direction of travel of the construction vehicle, rests on the guide rails (6, 7), **characterized in that** the guide rails (6, 7) are arranged next to the treading surface (2) used by the driver (17) so that the treading surface reaches up to under the first guide rail with sufficient free space so that the driver (17) of the construction vehicle can still slide his feet under the first guide rail (6), and that the seat carrier is adapted as a crossbeam, the width of which is chosen in such a way that the seat carrier (8) extends between the driver's (17) legs so as to enable the driver (17) to put his feet on the treading surface (2) without obstruction.

2. A seating apparatus for construction vehicles according to claim 1, **characterized in that** the seat carrier (8) is adapted in the form of a crossbeam, for example in the manner of an aluminum casting or an iron beam.

3. A seating apparatus for construction vehicles according to one of the claims 1 or 2, **characterized in that** means (11, 12) are provided on the seat carrier (8) which are adapted to be functionally complementary to the guide rail (6, 7) and which enable the adjustment of the seat carrier (8) in the longitudinal direction of the guide rail (6, 7).

4. A seating apparatus for construction vehicles according to claim 3, **characterized in that** the means (11, 12) are adapted in the manner of a linear bearing or roller guide.

5. A seating apparatus for construction vehicles according to one of the claims 1 to 4, **characterized in that**, viewed in the direction of travel, a guide rail (6) can be arranged at least slightly in front of the driver's seat (4) and a guide rail (7) can be arranged at least slightly behind the driver's seat (4), wherein the seat carrier (8) extends between the guide rails (6, 7).

6. A seating apparatus for construction vehicles according to one of the claims 1 to 5, **characterized in that** at least the front guide rail (6) is arranged in an elevated position with respect to the treading surface (2), preferably, however, at the level of the shinbone of the driver (17).

7. A seating apparatus for construction vehicles according to one of the claims 1 to 6, **characterized in that** each guide rail (6, 7) is associated with a support or carrier element (13, 14), wherein the guide rail (6, 7) is fastenable at least in sections to the support or carrier element (13, 14).

8. A seating apparatus for construction vehicles according to one of the claims 1 to 7, **characterized in that** the guide rail (6, 7) is adapted as a shaft.

9. A seating apparatus for construction vehicles according to one of the claims 1 to 8, **characterized in that** the guide rail (6, 7) is adapted in the manner of a slide or linear guide means.

10. A seating apparatus for construction vehicles according to one of the claims 1 to 9, **characterized in that** a blockable seat turning unit (15) is provided between the driver's seat (4) and the seat carrier (8), wherein the driver's seat (4) can be turned 360 degrees with the aid of the seat turning unit (15) about a vertical rotational axis of the seat turning unit (15).

11. A seating apparatus for construction vehicles according to one of the claims 1 to 10, **characterized in that** means (16) are provided with which the driver's seat (4) and/or the seat turning unit (15) can be displaced along the seat carrier (8).

## Revendications

1. Disposition de siège (1) destinée à être placée dans une cabine de conduite d'un engin de chantier présentant au moins une surface de plancher (2) et un pupitre de commande, en particulier d'un engin pour compacter le sol, laquelle disposition de siège (1) comprend un siège de conducteur (4) et un dispositif de manoeuvre (5) ainsi que la surface de plancher (2), et dans laquelle le dispositif de manoeuvre (5) comprend deux rails de guidage (6, 7) et un support de siège (8) suspendu librement par rapport à la surface de plancher (2) et déplaçable au-dessus de celle-ci, lequel support de siège (8) est supporté sur les rails de guidage (6, 7) de façon à pouvoir se déplacer perpendiculairement au sens de la marche de l'engin de chantier,
**caractérisée en ce que** les rails de guidage (6, 7) sont disposés à côté de la surface de plancher (2) utilisée par le conducteur (17) de telle manière que la surface de plancher (2) aille vers le haut, avec une marge libre suffisante, jusqu'en dessous du premier rail de guidage (6), de telle sorte que le conducteur (17) de l'engin de chantier puisse glisser ses pieds sous le premier rail de guidage (6), et **en ce que** le support de siège (8) est conçu comme une traverse dont la largeur est choisie de telle façon que le support de siège (8) passe entre les jambes du conducteur (17), de telle sorte que le conducteur (17) puisse poser ses pieds sans obstacle sur la surface de plancher (2).

2. Disposition de siège pour des engins de chantier selon la revendication 1, **caractérisée en ce que** le support de siège (8) est conformé comme une traverse, par exemple sous la forme d'une pièce moulée en aluminium ou d'un support en fer.

3. Disposition de siège pour des engins de chantier selon l'une des revendications 1 ou 2, **caractérisée en ce que** sont prévus sur le support de siège (8) des moyens (11, 12) complémentaires du point de vue fonctionnel du rail de guidage (6, 7) et permettant un déplacement du support de siège (8) dans le sens longitudinal du rail de guidage (6, 7).

4. Disposition de siège pour des engins de chantier selon la revendication 3, **caractérisée en ce que** les moyens (11, 12) sont conformés comme un palier linéaire ou un guide à rouleaux.

5. Disposition de siège pour des engins de chantier selon l'une des revendications 1 à 4, **caractérisée en ce que** vu dans le sens de la marche, un rail de guidage (6) est disposé au moins légèrement en avant et un rail de guidage (7) au moins légèrement en arrière du siège du conducteur (4), le support de siège (8) s'étendant entre les rails de guidage (6, 7).

6. Disposition de siège pour des engins de chantier selon l'une des revendications 1 à 5, **caractérisée en ce qu'**au moins le rail de guidage avant (6) est surélevé par rapport à la surface de plancher (2), mais de préférence à la hauteur des tibias du conducteur (17).

7. Disposition de siège pour des engins de chantier selon l'une des revendications 1 à 6, **caractérisée en ce que** chaque rail de guidage (6, 7) est associé à un élément d'appui ou de support (13, 14), le rail de guidage (6, 7) pouvant être fixé au moins par zones sur l'élément d'appui ou de support (13, 14).

8. Disposition de siège pour des engins de chantier selon l'une des revendications 1 à 7, **caractérisée en ce que** le rail de guidage (6, 7) est conformé comme un arbre.

9. Disposition de siège pour des engins de chantier selon l'une des revendications 1 à 8, **caractérisée en ce que** le rail de guidage (6, 7) est conformé comme un guide à glissement ou linéaire.

10. Disposition de siège pour des engins de chantier selon l'une des revendications 1 à 9, **caractérisée en ce qu'**une unité de pivotement de siège (15) pouvant être bloquée est prévue, laquelle unité de pivotement de siège (15) est disposée entre le siège du conducteur (4) et le support de siège (8), le siège du conducteur (4) pouvant être tourné de 360° à l'aide de l'unité de pivotement de siège (15) autour de l'axe de rotation vertical de l'unité de pivotement de siège (15).

11. Disposition de siège pour des engins de chantier selon l'une des revendications 1 à 10, **caractérisée en ce qu'**il est prévu des moyens (16) avec lesquels le siège du conducteur (4) et/ou l'unité de pivotement de siège (15) peuvent être déplacés le long du support de siège (8).
